# EUROPÄISCHE PATENTSCHRIFT

(11) **EP 0 735 444 B1**
(45) Veröffentlichungstag und Bekanntmachung des Hinweises auf die Patenterteilung: **07.06.2000**
(21) Anmeldenummer: 96104811.3
(22) Anmeldetag: 26.03.1996
(51) Int. Cl.: G05B 19/18, G05B 19/4061

(54) **Verfahren zum Betrieb einer Werkzeugmaschine oder eines Roboters mit unmittelbar zusammenwirkenden Hauptachsen und zusätzlichen Positionierachsen**
Method for operating a machine tool or a robot with directly interacting main axles and additional positioning axles
Procédé pour actionner une machine-outil ou un robot avec des axes principaux en coopération directe et avec des axes de positionnement supplémentaires

(30) Priorität: 31.03.1995 DE 19512173
(43) Veröffentlichungstag der Anmeldung: 02.10.1996
(73) Patentinhaber: SIEMENS AKTIENGESELLSCHAFT, 80333 München (DE)
(72) Erfinder: Rossi, Gernot, 91245 Simmelsdorf (DE); Schmidt, Wolfgang, Dr., 91315 Höchstadt (DE)

(56) Entgegenhaltungen:
- DE-A- 4 333 201
- US-A- 4 590 572

## Beschreibung

Die Erfindung bezieht sich auf ein Verfahren zum Betrieb einer Werkzeugmaschine oder eines Roboters mit unmittelbar zusammenwirkenden Hauptachsen sowie zusätzlichen Positionierachsen, wobei alle Achsen von einer numerischen Steuerung entsprechend einem satzweise gegliederten Teileprogramm mit Sollwerten für die auszuführenden Bewegungen versorgt werden.

Bei modernen Werkzeugmaschinen ist es nicht nur erforderlich, die Hauptachsen zu steuern, sondern es sind auch weitere Achsen, sogenannte Positionierachsen, zu berücksichtigen. Positionierachsen stellen eine Möglichkeit zur Programmierung paralleler Bewegungsvorgänge dar. Damit ist es also möglich, mindestens eine zweite Bewegung zur Werkzeug- und Werkstückhandhabung während der Hauptzeit auszuführen. Beispielhafte Anwendungsgebiete hierzu sind:
- Starten des Bewegungsvorganges eines Laders zur Werkstückentnahme bevor die Rückzugsbewegung des Werkzeugs auf eine sichere Position zum Stillstand gebracht würde,
- Steuerung einer Pinole,
- Positionierung eines neu einzuwechselnden Werkzeugs auf eine Werkzeugwechselposition parallel zum Bearbeitungsvorgang.

Bei mehrkanaligen Werkzeugmaschinensteuerungen war die Berücksichtigung von Positionierachsen bis dato nur möglich, wenn Haupt- und Positionierachsen in unterschiedlichen Kanälen gesteuert wurden (DE-OS 43 33 201). Dabei wurde der zeitliche Ablauf von Positionier- und Hauptachsen durch eine Anpaßsteuerung, eine sogenannte PLC, gesteuert bzw. synchronisiert. Eine Synchronisierung von Positionier- und Hauptachsen im selben Interpolationstakt war dabei nicht möglich.

Aufgabe der Erfindung ist es, ein Verfahren der eingangs genannten Art so auszubilden, daß sowohl Hauptachsen, als auch Positionierachsen gemeinsam programmiert werden können und nicht in mehreren Kanälen entkoppelt voneinander zu behandeln sind.

Gemäß der Erfindung wird diese Aufgabe dadurch gelöst, daß jeweils in einem Satz des Teileprogramms sowohl die Hauptachsen als auch die Positionierachsen entsprechend vorgegebener Parameter gestartet werden, daß dabei jedoch ein Zusatzkriterium für die jeweiligen Positionierachsen vergeben wird, das angibt, ob der nächste Satz des Teileprogramms ablaufen darf, wenn der vorangegangene Satz nur für die Hauptachsen abgearbeitet ist und die Positionierachsen gegebenenfalls noch die in diesem Satz gestarteten Bewegungen ausführen oder wenn der vorangegangene Satz sowohl für die Hauptachsen als auch für die Positionierachsen abgearbeitet ist.

Dadurch, daß ein gemeinsamer Interpolationstakt (IPO-Takt) zum Generieren der Sollwerte für die Hauptachsen und die Positionierachsen verwendet wird, ist eine Synchronisierung von Positionier- und Hauptachsen im selben IPO-Takt möglich.

Bedarfsweise können jedoch auch verschiedene Interpolationstakte zum Generieren der Sollwerte für die Hauptachsen und die Positionierachsen verwendet werden.

Ein Ausführungsbeispiel der Erfindung ist in der Zeichnung dargestellt und wird im folgenden näher erläutert. Dabei zeigen:
- FIG 1: die Struktur des Zusammenspiels einer numerischen Steuerung mit einer Werkzeugmaschine,
- FIG 2: ein erstes Teileprogramm mit resultierendem Zeit-Geschwindigkeitsverlauf und
- FIG 3: ein zweites Teileprogramm mit resultierendem Zeit-Geschwindigkeitsverlauf.

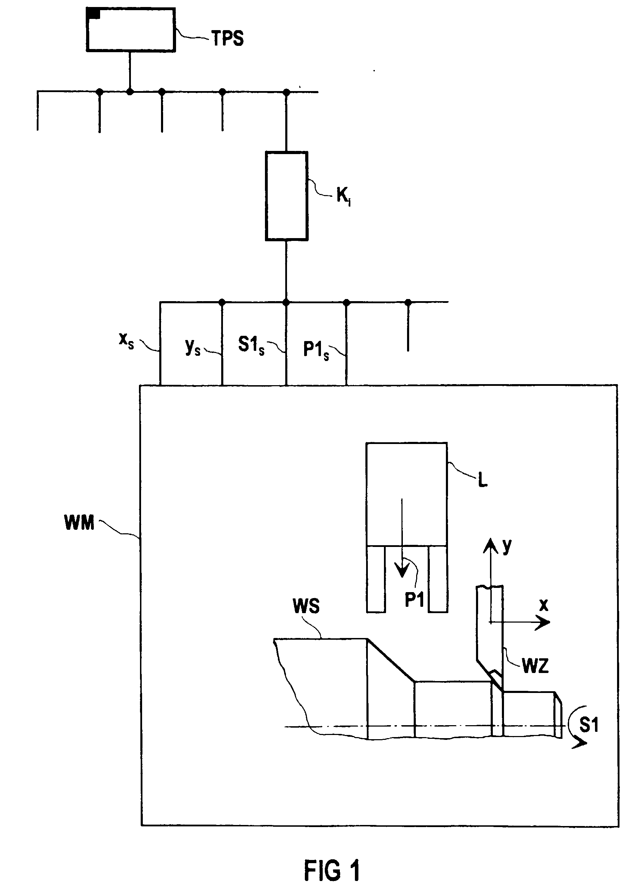

In der Darstellung gemäß FIG 1 ist in Form eines Blockschaltbildes angedeutet, wie aus einem Teileprogrammspeicher TPS einer der Übersichtlichkeit halber nicht weiter dargestellten numerischen Steuerung über einen Kanal Kᵢ der Steuerung Sollwerte für die auszuführenden Bewegungen der Aggregate einer Werkzeugmaschine WM ausgegeben werden. Bei der Werkzeugmaschine WM mag es sich dabei um eine Drehmaschine handeln, bei der ein Werkstück WS um eine Achse S1 gedreht wird und wobei ein Werkzeug WZ, in diesem Fall ein Drehmeißel, in zwei Achsen x und y positioniert wird. Die Sollwerte für die Bewegungen der Achsen S1, x und y werden über die numerische Steuerung als Werte xₛ, yₛ und S1ₛ aus demselben Kanal Kᵢ geliefert, der dann auch Sollwerte P1ₛ für die Position P1 eines Laders L, bei den es sich um einen Werkzeuglader handeln möge, liefert. Selbstverständlich können noch weitere Achsinformationen von der numerischen Steuerung an die Werkzeugmaschine WM gegeben werden, wie dies durch offene Ausgänge am Kanal Kᵢ angedeutet ist. Ebenso soll das offene Netzwerk hinter dem Teileprogrammspeicher TPS und den Kanal Kᵢ darauf hindeuten, daß auch weitere Kanäle der numerischen Steuerung für andere Steuerungszwecke zur Verfügung stehen.

Zunächst sei angenommen, daß der Wunsch bestehen möge, daß zwar die Hauptachsen x und y wie auch die Positionierachse P₁ gemeinsam gestartet werden, daß jedoch dann unverzüglich nach Beendigung der ausgelösten Bewegungen für die Hauptachsen der nächsten Satz des Programms fortgeführt werden kann, ohne daß zuerst die Beendigung der Bewegung der Positionierachse P1 abzuwarten wäre.

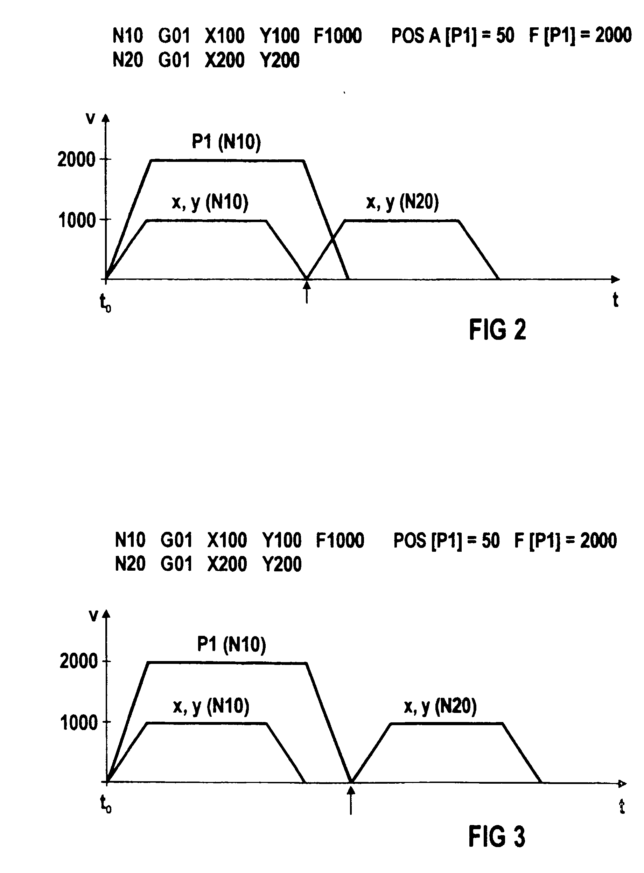

Programmtechnisch könnte das, wie im oberen Teil von FIG 2 angedeutet, so aussehen, daß in einem ersten Satz N10 zunächst mit der Kennung G01 angegeben wird, daß eine Linearbewegung der Hauptachsen erfolgen soll. Durch die Parameter X100 und Y100 wird die anzufahrende Position angegeben und mit F1000 wird die Geschwindigkeit der Bewegung definiert. In diesem Satz N10 wird jedoch nun ein Zusatzkriterium eingeführt, das im Beispiel als POS A angibt, daß die im folgenden spezifizierte Positionierachse P1 zwar mit dem Satz N10 gestartet wird, jedoch unabhängig von der weiteren Programmabfolge weiterbewegt wird, bis ein durch POS A [P1] = 50 definierter Ort "50" der Positionierachse P1 erreicht ist. Durch F[P1] = 2000 wird die Geschwindigkeit der Positionierachsbewegung definiert.

In einem nächsten Satz des Teileprogramms, d.h. im Ausführungsbeispiel einem Satz N20, kann dann angegeben sein., daß durch eine weitere Linearbewegung mit gleichbleibender Geschwindigkeit die Hauptachsen x und y auf Werte X200 und Y200 zu verfahren sind.

Der resultierende Zeit-Geschwindigkeitsverlauf v = f(t) ist im unteren Teil von FIG 2 dargestellt. So ist ersichtlich, daß zur Zeit t₀ sowohl die Bewegungen der Hauptachsen x, y als auch der Positionierachse P1 gestartet werden. Die kinematisch gekoppelten Hauptachsen x und y werden gemäß der Information des Satzes N10 mit Geschwindigkeit "1000" so bewegt, daß die Werte X100 und Y100 erreicht werden. Bei Erreichen dieser Werte kann - aber muß nicht - eine Geschwindigkeitsabsenkung vorgenommen werden. Typisch ist jedoch, daß mit dem Erreichen der angestrebten Position der Hauptachsen des Satzes N10 unverzüglich der nächste neue Satz N20 gestartet wird. Dies ist in der Darstellung durch einen Pfeil angedeutet. Die Positionierachse P1 wird nun im folgenden solange weiterverfahren, bis die dort angestrebte zugewiesene Position "50" erreicht ist und kann dann stillgesetzt werden.

In der Darstellung gemäß FIG 3 ist ein weiteres Ausführungsbeispiel gezeigt, das im wesentlichen dem Ausführungsbeispiel gemäß FIG 2 entspricht, jedoch ist hier der Fall angenommen, daß der Satz N20 erst dann gestartet werden soll, wenn sowohl die Bewegung der Hauptachsen im Satz N10 als auch die Bewegung der Positionierachse im Satz N10 abgeschlossen ist. Dazu entspricht die zugehörige Programmierung zwar in fast allen Schritten der obengenannten Programmierung, jedoch wird dabei anstelle des Kriteriums POS A ein Kriterium POS verwendet. Dies wird in der Steuerung so detektiert und ausgewertet, daß vor Start des einem solchen Zusatzkriteriums folgenden nächsten Satzes, d.h. in diesem Fall des Satzes N20, zunächst die Bewegung der Positionierachse P1 beendet sein muß. Erst dann, wenn also die im Satz N10 ausgelösten Bewegungen von Hauptachsen und Positionierachsen abgeschlossen sind, wird der nächste Satz des Teileprogramms, in diesem Fall der Satz N20, gestartet. Dieser Sachverhalt ist ebenfalls durch einen Pfeil auf der Zeitachse im unteren Teil von FIG 3 angedeutet.

## Patentansprüche

1. Verfahren zum Betrieb einer Werkzeugmaschine (WM) oder eines Roboters mit unmittelbar zusammenwirkenden Hauptachsen (x,y,S1) sowie zusätzlichen Positionierachsen (P1), wobei alle Achsen (x,y,S1,P1) von einer numerischen Steuerung entsprechend einem satzweise gegliederten Teileprogramm mit Sollwerten (xₛ,yₛ,S1ₛ,P1ₛ) für die auszuführenden Bewegungen versorgt werden, wobei jeweils in einem Satz(N10) des Teileprogramms sowohl die Hauptachsen (x,y) als auch die Positionierachsen (P1) entsprechend vorgegebener Parameter gestartet werden, wobei jedoch ein Zusatzkriterium (POS A bzw. POS) für die jeweiligen Positionierachsen (P1) vergeben wird, das angibt, ob der nächste Satz (N20) des Teileprogramms ablaufen darf, wenn der vorangegangene Satz nur für die Hauptachsen abgearbeitet ist und die Positionierachsen gegebenenfalls noch die in diesem Satz gestarteten Bewegungen ausführen oder wenn der vorangegangene Satz sowohl für die Hauptachsen als auch für die Positionierachsen abgearbeitet ist.

2. Verfahren nach Anspruch 1, **dadurch gekennzeichnet,** daß ein gemeinsamer Interpolationstakt zum Generieren der Sollwerte für die Hauptachsen und die Positionierachsen verwendet wird.

3. Verfahren nach Anspruch 1, **dadurch gekennzeichnet,** daß verschiedene Interpolationstakte zum Generieren der Sollwerte für die Hauptachsen und die Positionierachsen verwendet werden.

## Claims

1. Method for operating a machine tool (WM) or a robot having directly interacting main axes (x, y, S1) and also additional positioning axes (P1), wherein all of the axes (x, y, S1, P1) are supplied, by a numerical control in accordance with a subprogram organised in blocks, with setpoints (xₛ, yₛ, S1ₛ, P1ₛ) for the movements to be carried out, wherein in each case in a block (N10) of the subprogram, both the main axes (x, y) and the positioning axes (P1) are started in accordance with predetermined parameters, in which case, however, an additional criterion (POS A or POS) is given for the respective positioning axes (P1), which additional criterion indicates whether the next block (N20) of the subprogram may run if the previous block has been processed only for the main axes and the positioning axes are possibly still carrying out the movements started in this block or if the previous block has been processed both for the main axes and for the positioning axes.

2. Method according to claim 1, characterised in that a common interpolation cycle is used for generating the setpoints for the main axes and the positioning axes.

3. Method according to claim 1, characterised in that different interpolation cycles are used for generating the setpoints for the main axes and the positioning axes.

## Revendications

1. Procédé pour faire fonctionner une machine-outil (WM) ou un robot ayant des axes (x, y, S1) principaux coopérant directement ainsi que des axes (P1) de mise en position supplémentaires, tous les axes (x, y, S1, P1) étant alimentés par une commande numérique en valeurs (xₛ, yₛ, S1ₛ, P1ₛ) de consigne pour les déplacements à effectuer suivant un sous-programme décomposé par blocs, chaque fois tant les axes (x, y) principaux que les axes (P1) de mise en position étant démarrés dans un bloc (N10) du sous-programme en fonction de paramètres prescrits, mais un critère (POS A et POS) supplémentaire, qui indique si le bloc (N20) suivant du sous-programme peut se dérouler, étant assigné, si le bloc précédent n'est traité que pour les axes principaux et les axes de mise en position exécutent éventuellement encore les déplacements démarrés dans ce bloc ou si le bloc précédent est traité tant pour les axes principaux que pour les axes de mise en position.

2. Procédé suivant la revendication 1, caractérisé en ce que l'on utilise une cadence d'interpolation commune pour générer des valeurs de consigne pour les axes principaux et les axes de mise en position.

3. Procédé suivant la revendication 1, caractérisé en ce que l'on utilise des cadences d'interpolation différentes pour générer les valeurs de consigne pour les axes principaux et les axes de mise en position.
